Europäisches Patentamt

European Patent Office

Office européen des brevets

(11) Publication number: **0 232 459**
**A1**

(12) **EUROPEAN PATENT APPLICATION**

(21) Application number: **86113398.1**

(22) Date of filing: **29.09.86**

(51) Int. Cl.4: **G01N 27/12**

(30) Priority: **31.10.85 US 793614**

(43) Date of publication of application:
**19.08.87 Bulletin 87/34**

(84) Designated Contracting States:
**DE FR GB IT**

(71) Applicant: **BENDIX ENGINE COMPONENTS LIMITED**
**540 Park Avenue East P.O. Box 2014**
**Chatham Ontario N7M 5M7(CA)**

(72) Inventor: **Cook, John Edward**
**17 Kingsway Drive.**
**Chatam Ontario N7L 2S8(CA)**
Inventor: **Remick, Cassius Denzil**
**30 Trullium Village Apt. 701**
**Chatam Ontario N7L 4S2(CA)**

(74) Representative: **Brullé, Jean et al**
**Service Brevets Bendix 44, rue François 1er**
**F-75008 Paris(FR)**

(54) **Hydrocarbon concentration sensor.**

(57) A system (10) including a vapor concentration sensor (20) for regulating the flow of gasoline vapor from a storage canister. The sensor (20) comprises a passage means (22,30,24) for establishing a preferred flow path (14) for said vapor. A vapor sensitive electrically conductive material (20) is disposed in the passage the material changes in size in accordance with the concentration of hydrocarbons in said vapor to vary its resistance, and a control circuit - (78) connected to the material for measuring its resistance.

FIG. 2

EP 0 232 459 A1

# HYDROCARBON CONCENTRATION SENSOR

Background and Summary of the Invention

The present invention is directed to a hydrocarbon concentration sensor for generating a signal indicative of the concentration of hydrocarbons within a vapor. More particularly, the invention relates to a device which incorporates a carbonized, silicon rubber, electrically conductive material which varies in size in proportion to the concentration of hydrocarbons within a vapor exposed thereto to vary its electrical resistance.

In order to control the emission of residual hydrocarbon vapors within the intake manifold of an engine or within the fuel tank, charcoal canisters have been incorporated within a pollution control system for storing these vapors. When the engine is restarted a control device such as a control solenoid may be used to regulate the rate at which hydrocarbons are taken from the canister and reintroduced into the intake manifold. The control solenoid or similar device is typically vacuum responsive and during idle or under light engine load, when there exists a large degree of engine vacuum, the hydrocarbons may be returned at a substantial concentration to the engine. Consequently, there may be produced a surge in hydrocarbons in the exhaust gas especially if the canister had been saturated. Typically, an open loop control is used to regulate the flow rate of hydrocarbons into the intake manifold which is varied with engine load but not in proportion to the concentration of hydrocarbons stored within the canister. Consequently, it can be seen that, as used in the prior art, if the rate is modified based only on engine load without the knowledge of the degree of hydrocarbon concentration within the canister, a surge in hydrocarbons in the exhaust will occurr. In addition, since many fuel management systems are closed loop systems that incorporate an oxygen sensor in the exhaust system the surge in hydrocarbons caused by the intake of hydrocarbons from the evaporation canister will cause the engine management system to reduce the amount of fuel going to the fuel injectors of the engine which will cause the engine to misfire or otherwise run rough.

The present invention provides a means for supplying the control solenoid with information regarding the concentration of hydrocarbons within the gasoline vapor flowing to the intake manifold of the engine such that the duty cycle of the control solenoid may be modified in accordance with the hydrocarbon concentration to prevent such surges. The present invention provides a simple and reliable solution to the deficiencies in the art.

It is an object of the present invention to provide a hydrocarbon concentration sensor which generates an electrical signal proportional to the concentration of hydrocarbons within a vapor. A further object of the present invention is to sense hydrocarbon concentration by passing the vapor across an electrically conductive material which expands and contracts in proportion to the hydrocarbon concentration to thereby change its electrical resistance.

Accordingly, the present invention comprises:

A consentration sensor and a system including same for sensing the concentration of hydrocarbons within a vapor and varying the rate of flow of gasoline vapor from a storage canister into the intake manifold of an engine. The system comprises:

means for sensing the concentration of hydrocarbons in the vapor and for generating a signal indicative thereof, comprising an electrically conductive first member which changes its size in accordance with the concentration of hydrocarbons communicated thereto thereby changing its electrical resistivity and control valve means responsive to the signal for varying the flow of the vapor to the intake manifold.

Many other objects, advantages and purposes of the invention will be clear from the following detailed description of the drawings.

Brief Description of the Drawings

In the drawings:

FIGURE 1 illustrates a projected view of a hydrocarbon concentration sensor.

FIGURE 2 illustrates a sectional view of the concentration sensor of FIGURE 1.

Detailed Description of the Drawings

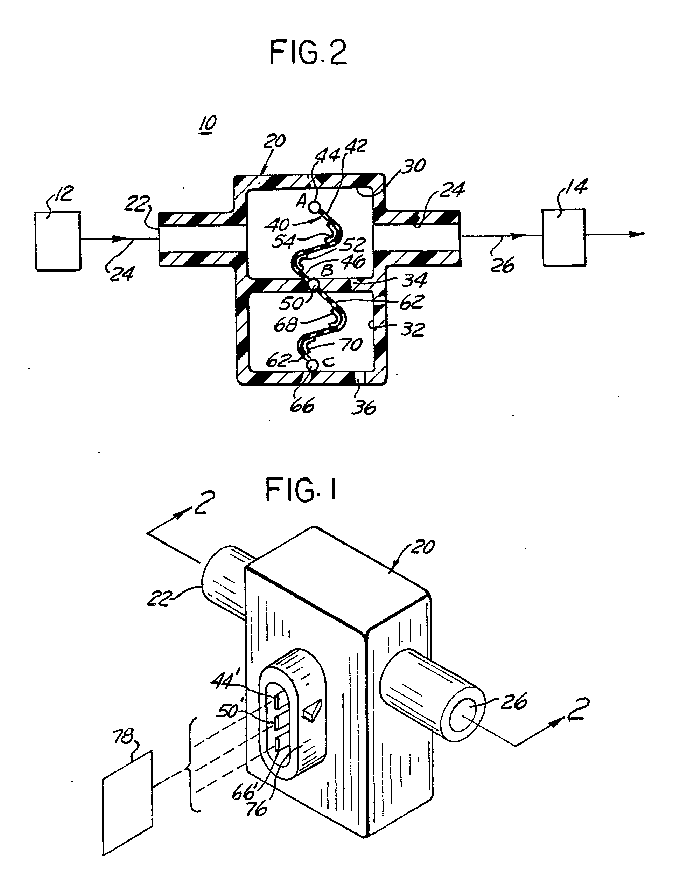

With reference to FIGURES 1 and 2, there is illustrated a hydrocarbon concentration sensor 10. The sensor 10 forms part of a hydrocarbon vapor recovery system comprising a charcoal canister 12 for storing gasoline vapor and a control solenoid 14 for controlling the rate at which this gasoline vapor is reintroduced into the intake manifold of an internal combustion engine. The concentration sensor 10 comprises a housing 20 which includes an inlet port 22 adapted to communicate via a vacuum line 24 with the charcoal canister and an output port 24 adapted to communicate with the control solenoid 14 through a vacuum line 26.

The housing 20 further includes a first chamber 30 situated between the input and output ports 22 and 24, respectively, and in communication therewith. The housing 20 may further include a second chamber 32 remotely situated and isolated from the first chamber 30. More particularly, the housing 20 may include a cross-member 34 for isolating the respective chambers 30 and 32. The second chamber 32 may be sealed or, alternatively, exposed to atmosphere through a vent port 36. It is preferable that the first and second chambers be mounted in close proximity with each other such that they are exposed to substantially identical operating temperatures.

Disposed within the flow of the gasoline vapors within the first chamber 30 is a first strip of electrically conductive material 40. The first strip (vapor sensing strip) 40 is disposed within the first chamber 30 so as to present a predetermined surface area to the incoming gasoline vapor as it flows thereabout and exits through the outlet port 24. The conductive strip 40 is connected at one end 42 to a first electrical terminal 44. A second end 46 of the first strip 40 is connected to a common terminal 50 which may be imbedded in the cross-member 34. The housing 20 further includes a plurality of support members or tabs 52 and 54 about which the first conductive strip is wound to thereby permit use of a longer strip to increase the available surface area exposed to the gasoline vapor flow.

Positioned within the second chamber 32 is a second electrically conductive strip (temperature compensating strip) 60 which is of the exact dimension and constituency as the first strip 40. One end 62 of the second strip is connected to the common electric terminal 50 and a second end 64 is connected to a third electric terminal 66. The second chamber 32 may further include support members 68 and 70 for supporting the second strip in a manner as described above. The electric terminals 44, 50 and 66 are communicated to a connector assembly 76 in a known manner. The connector assembly 76 comprises three terminals 44', 50' and 66' connected to its corresponding terminal 40, 50 and 66 within the housing 20. The terminals 44', 50' and 66' are communicated to control circuitry such as an electronic controlled unit 78.

It has been discovered that silicon rubber, when exposed to gasoline vapor, will change its physical size in accordance with the concentration of hydrocarbons within the vapor. The silicon rubber may be made conductive by adding a certain amount of conductive material, such as carbon. Consequently, as the silicon rubber expands and contracts in accordance with the concentration of hydrocarbons presented thereto, the electrical resistance of the silicon rubber changes accordingly, presumably due to the varying of the spacing of the carbon particles. The percentage of conductive material or carbon introduced into the silicon rubber may vary in accordance with its specific application. One such conductive silicon rubber compound is SE7600 manufactured by the General Electric Company. The volume resistivity of this material may be varied from five ohm-cm to one x $10_{14}$ ohm-cm through appropriate blending. This material is of a polymer classification MeViSi and has been used in applications involving heating tapes, wireless ignition cables, and gaskets for home appliances.

In operation, the vacuum generated at the intake manifold of the engine is communicated through the control solenoid 14, the concentration sensor 20, to the canister 12, thereby withdrawing the stored gasoline vapor therein and reintroducing the gasoline vapor into the intake manifold of the engine where it is combusted. The contol solenoid 14 may be of the type comprising and electrically responsive coil which moves a valve element relative to a valve seat in response to a variable duty cycle signal generated by an electronic control unit such as 78. Such duty cycle may be varied in accordance with engine operating perameters such as absolute manifold pressure, engine r.p.m., and the concentration of hydrocarbons as sensed by the concentration sensor 20. One such control solenoid has been disclosed in the commonly assigned patent application 664,915, which is incorporated herein by reference. As the gasoline vapor is withdrawn from the canister 12, the conductive strip 40 will vary in size, thereby changing its electrical resistance. Methods and circuitry for measuring electrical resistance are well-known in the art and need not be elaborated upon. It is sufficient to say that the control circuit or ECU 78 communicated to terminals 44' and 50' are capable of measuring the electrical resistance of the first strip 40. Such resistance signal will be utilized by the ECU 78 in concert with other vehicle operating parameters to vary the duty cycle of the control solenoid 14 to thereby vary and regulate the rate of flow of the reintroduced gasoline vapor.

The conductive strip 40 will also change its resistance as the temperature of its operating environment changes. In order to compensate for these temperature changes, the second electrically conductive strip 60 has been incorporated within the invention. As can be seen from the drawings, this second strip 60 has been isolated from the hydrocarbon flow and is preferably located proximate to the first conductive strip such that it is exposed to the same operating temperature. This second strip 60 may be lodged in a sealed chamber or, alternatively, in a vented chamber 32, as illustrated in FIGURE 2. Methods and circuitry for compensating for temperature changes of resistive elements are well known. As an example, the first and second electrically conductive strips 40 and 60 may comprise part of a bridge circuit (not shown) for compensating such temperature changes or, alternatively, the ECU 78 may serially interrogate the resistance of the first strip 40 and then the second strip 66 and compensate for the resistance changes in the first strip 40 resulting from temperature and hydrocarbon concentration based upon the measured value of the resistance of the second strip 60 which varies only due to temperature effects.

It has been found that by impressing an electrical current across the vapor sensing element 40 the rate of change of its resistance with hydrocarbon concentration increases and rapidly approaches a limit value.

The following relates to an alternate embodiment of the invention. In this embodiment of the ECU 78 may be provided with a regulated voltage source such as approximated 8 volts which is impressed across the terminals 44 and 66, thereby providing for a current flow across the vapor sensing strip 40 and temperature compensating strip 40. Assuming, as an example, that the vapor sensing strip 40 and the temperature compensating strip 60 are identical and further that there is no vapor present, an identical voltage drop will occur across both strips 40 and 60, respectively. As the concentration of hydrocarbons exposed to the vapor sensing strip 40 changes its resistance will vary accordingly, thereby changing the voltage drop thereacross, i.e. between terminals 44 and 50. This change in voltage, which is proportional to the concentration of hydrocarbons is sensed and measured by the ECU 78.

Correspondingly, the voltage across the temperature compensating strip 60, which resistance does not change with vapor concentration or the current flowing through both strips, can be sensed since this voltage and current are similarly proportional to changes in the resistance, i.e. vapor concentration, of the vapor sensing strip.

Many changes and modifications in the above described embodiment of the invention can, of course, be carried out without departing from the scope thereof. Accordingly, that scope is intended to be limited only by the scope of the appended claims.

## Claims

1. A vapor concentration sensor (10) comprising:
passage means (22,30,24) for establishing a preferred flow path (14) for said vapor;
a first portion of vapor sensitive material (20) disposed in said passage means characterized in that the electrical resistance of said material varies in accordance with the concentration of hydrocarbons in said vapor,
means (78) connected to said material for measuring the resistance thereof.

2. The sensor (10) as defined in Claim 1 characterized in that said material comprises an electrically conductive silicon rubber compound.

3. The sensor (10) as defined in Claim 2 characterized in that said silicon rubber component is of a polymer classification MeViSi.

4. The sensor (20) as defined in Claim 1 further including a second portion (22) of said material isolated from said vapor and exposed to substantially the same temperature as said first portion.

5. The sensor as defined in Claim 4 further including a chamber (32) remote from said flow passage means (22,24) for isolating said second strip from said vapor.

6. The sensor as defined in Claim 5 characterized in that said chamber is open to atmosphere.

7. The sensor as defined in Claim 6 characterized in that said first and second strips are joined at a respective end thereof to a common electrical terminal.

8. The sensor (10) as defined in Claim 7 characterized in that said measuring means includes means for impressing an electrical current across the series combination of said first and second strips (40,60) and means for measuring a parameter proportional to the change in resistance of said first strip.

9. The sensor (10) as defined in Claim 8 characterized in that said measuring means includes a regulated voltage source.

10. The sensor (10) as defined in Claim 1 characterized in that said material is a silicon rubber compound having a sufficient amount of carbon therein to achieve a predetermined change in resistance as said material reacts to the hydrocarbon concentration of the vapor communicated thereto.

11. A method of generating a signal proportional to the concentration of hydrocarbons within a vapor; comprising the steps of:
introducing the vapor to an electrically conductive, hydrocarbon sensitive first material, said material of the type whose size and electrical resistance changes in accordance with hydrocarbon concentration,
disposing a second material, identical with said first material, remote from said vapor in circuit with said first material,
introducing a predetermined electrical signal across said first and said second material,
measuring a parameter indicative of the change in electrical resistance of said first material.

12. The method as defined in Claim 11 characterized in that said step of disposing includes connecting said first and second material in series.

13. The method as defined in Claim 12 characterized in that said step of introducing includes impressing a predetermined voltage signal across the series combination of said first and second material.

# FIG.2

# FIG·1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 327 054 (YASUDA et al.)<br>* The whole document * | 1,11 | G 01 N 27/12 |
| A | | 4-10,<br>12,13 | |
| | --- | | |
| X. | US-A-4 288 774 (TAKAMI et al.)<br>* Column 2, line 11 - column 3, line 42 * | 1 | |
| | --- | | |
| A | US-A-4 137 494 (MALLEY et al.)<br>* Abstract * | 1-13 | |
| | --- | | |
| A | US-A-4 125 822 (PERREN et al.)<br>* Column 1, line 23 - column 2, line 19 * . | 2,3 | |
| | ----- | | TECHNICAL FIELDS SEARCHED (Int. Cl.4)<br><br>G 01 N |

The present search report has been drawn up for all claims

| Place of search | Date of completion of the search | Examiner |
|---|---|---|
| THE HAGUE | 07-05-1987 | RAUTER |